# EUROPÄISCHE PATENTSCHRIFT

(11) **EP 3 898 913 B1**
(45) Veröffentlichungstag und Bekanntmachung des Hinweises auf die Patenterteilung: **05.07.2023**
(21) Anmeldenummer: 19829508.1
(22) Anmeldetag: 17.12.2019
(51) Int. Cl.: C11D 3/16, B01J 20/30, C07F 5/06, C07F 19/00

(54) **VERFAHREN ZUR HERSTELLUNG VON METAL ORGANIC FRAMEWORKS**
PROCESS FOR PRODUCING METAL ORGANIC FRAMEWORKS
PROCÉDÉ POUR LA PRODUCTION DE RÉSEAUX ORGANOMÉTALLIQUES

(30) Priorität: 18.12.2018 DE 102018222193
(43) Veröffentlichungstag der Anmeldung: 27.10.2021
(73) Patentinhaber: Henkel AG & Co. KGaA, 40589 Düsseldorf (DE)
(72) Erfinder: KROPF, Christian, 40724 Hilden (DE); WEYHE, Marc, 47802 Krefeld (DE); KASKEL, Stefan, 01159 Dresden (DE); HAUSDORF, Steffen, 01904 Ringenhain (DE); MÜLLER, Philipp, 23566 Lübeck (DE)
(86) Internationale Anmeldenummer: PCT/EP2019/085780
(87) Internationale Veröffentlichungsnummer: WO 2020/127368

(56) Entgegenhaltungen:
- WO-A1-2012/156436
- DE-A1-102015 211 920
- DE-A1-102017 209 840
- CHRISTOPHE VOLKRINGER ET AL: "Synthesis, Single-Crystal X-ray Microdiffraction, and NMR Characterizations of the Giant Pore Metal-Organic Framework Aluminum Trimesate MIL-100", CHEMISTRY OF MATERIALS, Bd. 21, Nr. 24, 22. Dezember 2009 (2009-12-22), Seiten 5695-5697, XP055473298, ISSN: 0897-4756, DOI: 10.1021/cm901983a
- LOISEAU THIERRY ET AL: "MIL-96, a Porous Aluminum Trimesate 3D Structure Constructed from a Hexagonal Network of 18-Membered Rings and .mu.3-Oxo-Centered Trinuclear Units", JOURNAL OF THE AMERICAN CHEMICAL SOCIETY,, Bd. 128, Nr. 31, 1. Januar 2006 (2006-01-01), Seiten 10223-10230, XP002531103, ISSN: 0002-7863, DOI: 10.1021/JA0621086

## Beschreibung

Die vorliegende Erfindung betrifft ein Verfahren zur Herstellung von Metal Organic Frameworks (MOF).

Textilien verlieren nach dem Waschen schnell ihren frischen Duft, wenn sie getragen werden, insbesondere bei gleichzeitiger körperlicher Betätigung des Trägers, die zu Schweißbildung führt. An die Stelle des Frischegeruchs tritt der Geruch von Schweiß, der sowohl vom Träger als auch von anderen Personen als unangenehm empfunden wird.

Insgesamt werden die meisten Körpergerüche als unangenehm empfunden. Als Körpergeruch werden alle riechbaren Körperausdünstungen von Menschen über die Haut und auch im weiteren Sinne auch aus anderen Körperöffnungen, wie zum Beispiel Mundgeruch, oder auch durch Exkremente (Urin, Faeces, Flatus) verursachte Gerüche bezeichnet. Am deutlichsten wahrnehmbar ist üblicherweise der Geruch von Schweiß, wobei nur die Absonderungen der apokrinen Schweißdrüsen riechen, die vor allem in den Achseln sitzen. Bei der bakteriellen Zersetzung der im Achselschweiß enthaltenen Substanzen, unter anderem körpereigene Fette und Proteine, entstehen Gerüche, welche als unangenehm und häufig sogar als abstoßend wahrgenommen werden.

Hauptverantwortlich für den Körpergeruch, insbesondere für den Schweißgeruch, sind ungesättigte oder hydroxyliert-verzweigte Fettsäuren, wie beispielsweise 3-Methyl-2-Hexansäure oder 3- Hydroxy-3-methylhexansäure, oder Sulfanylalkohole wie 3-Methyl-sulfanylhexan-1-ol. Der Körpergeruch selbst wird durch unterschiedliche Bakterien, die die Hautflora darstellen, beeinflusst. Diese bilden sogenannte Lipasen, welche die Fettsäuren zu kleineren Molekülen, beispielsweise Butansäure (Buttersäure), abbauen. Auch Propansäure (Propionsäure) ist ein häufiger Bestandteil von Schweiß. Sie entsteht beim Abbau von Aminosäuren durch sogenannte Propansäurebakterien.

Neben dem Körpergeruch werden in der vorliegenden Erfindung auch andere von Menschen als unangenehm empfundene Gerüche als Fehlgerüche bezeichnet, etwa solche, die von Essensresten, von Verunreinigungen des Bodens oder anderer Oberflächen, von Tabakrauch oder auch von verrottenden und vermodernden Organismen herrühren.

Heutzutage werden Wasch- oder Reinigungsmitteln häufig Parfümöle zugesetzt. Diese sorgen dafür, dass Fehlgerüche übertönt werden, beziehungsweise erst nach einer gewissen Zeit für den Menschen wahrnehmbar sind. Heutzutage nehmen jedoch allergische Reaktionen auf einzelne Bestandteile unterschiedlicher Formulierungen zu, unter anderem auch auf Parfümöle. Es besteht auch daher Bedarf an Formulierungen mit einem möglichst geringen Gehalt an Parfümölen. Zudem ist es erwünscht, Fehlgerüche nicht zu übertönen, sondern wenigstens teilweise und bevorzugt vollständig aufzunehmen und somit aus dem Textil beziehungsweise von der Oberfläche, beispielsweise von Geschirr, oder Böden zu entfernen. Es hat sich gezeigt, dass MOFs (Metal organic frameworks) in der Lage sind, Fehlgerüche einzuschließen und sie somit in ihrer Geruchsstärke herabzusetzen oder Fehlgerüche sogar vollständig zu vermeiden.

Metal organic frameworks (MOFs) sind Gerüste, die aus Metallzentren (Atome oder Cluster) und organischen Brückenmolekülen (Linker) als Verbindungselement zwischen den Metallzentren bestehen. MOFs können grundsätzlich zwei- oder dreidimensional sein, vorzugsweise liegen in der vorliegenden Erfindung die MOFs mit dreidimensionalen, porösen Netzwerken vor. Bei MOFs handelt es sich um Koordinationspolymere. Durch die Wahl der Linkergröße lässt sich die Porengröße der MOFs variieren.

Dabei ist es notwendig, dass die Poren so groß sind, dass sie die Moleküle, welche für den Fehlgeruch verantwortlich sind, einschließen. Sind die MOFs in Zubereitungen, beispielsweise Wasch- oder Reinigungsmittel, eingearbeitet, dürfen die Poren jedoch nicht so groß sein, dass sie wirksame Bestandteile der entsprechenden Zubereitung, bei Wasch- oder Reinigungsmitteln, beispielsweise Tenside, einschließen und damit die Wirksamkeit verringern.

Besonders bevorzugt sind MOFs, welche wenigstens zwei Carbonsäuregruppen (COOH-Gruppen) aufweisen. Bevorzugt sind Liganden vom Typ HOOC-A-COOH, wobei A ausgewählt ist aus 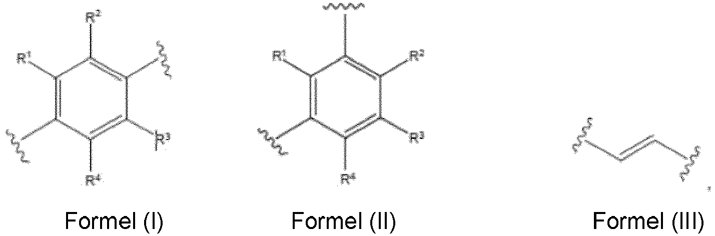 in welchen R¹, R², R³ und R⁴ jeweils unabhängig voneinander -H, -COOH, -COO-, -OH oder-NH₂ sind.

Der Ligand (organisches Brückenmolekül, Linker) des MOF ist vorzugsweise ausgewählt aus der folgenden allgemeinen Formel (IV) 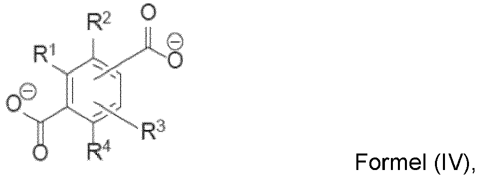 wobei R¹, R², R³ und R⁴ in der allgemeinen Formel (IV) unabhängig voneinander für -H, - COOH, - COO-, -OH oder -NH₂ stehen.

Besonders bevorzugt ist der organische Ligand des MOF ausgewählt aus 1,4-Benzoldicarbonsäure (BDC), 1,3,5-Benzoltricarbonsäure (BTC), 2-Amino-1,4-Benzoldicarbonsäure (ABDC), Fumarsäure, deren ein-, zwei- oder dreiwertigen Anionen oder Mischungen davon.

Ein MOF kann mehrere unterschiedliche organische Liganden aufweisen oder nur einen organischen Liganden.

Als metallische Komponente (Metallzentrum) umfasst das MOF vorzugsweise Aluminium, Titan, Zirkonium, Eisen, Zink, Bismut oder Oxocluster, Hydroxocluster, Hydroxyoxocluster oder Mischungen hiervon. Besonders bevorzugt umfasst das MOF Aluminium und/oder Eisen. Überraschenderweise hat sich gezeigt, dass andere als die genannten Metalle häufig zu einer Verfärbung von Textilien führen, sollten die in Kontakt mit den sogenannten MOF gelangen. Daher ist es insbesondere beim Einsatz der MOFs in Waschmitteln, welche zum Waschen von Textilien eingesetzt werden, bevorzugt, wenn Aluminium und/oder Eisen als metallische Komponente eingesetzt werden. Es hat sich gezeigt, dass insbesondere Kupfer zu einer Verfärbung von Textilien, und auch zu einer Anfärbung rauher Oberflächen führt, so dass das MOF vorzugsweise frei von Kupfer ist.

Ein zur Verringerung von Fehlgerüchen besonders geeigneter MOF ist MIL-100 (Al), bei dem Aluminium als Metallzentrum und Trimesinsäure (1,3,5-Benzoltricarbonsäure) als anorganischer Ligand dient. Dieser MOF wird bislang in einer Synthese gewonnen, die hohe Temperaturen und Drücke erfordert. Zudem führt der bislang erforderliche Einsatz von Salpetersäure zu einer gelblichen Verfärbung des erhaltenen Produkts, und bei der Umsetzung des Trimesinsäureprecursors Trimesinsäuremethylester wird toxisches Methanol freigesetzt. Weiterhin kommt es während der Reaktion aufgrund der drastischen Reaktionsbedingungen zur teilweisen Zersetzung des Nitrats unter Bildung gesundheitsschädlicher nitroser Gase. Das Produkt ist nach der Synthese tief gelb gefärbt, vermutlich durch nitrierte Nebenprodukte, und enthält zudem Reste nicht umgesetzter Trimesinsäure, die in den Poren der Gerüstverbindung eingeschlossen ist. Daher muss an die Synthese ein aufwendiger Waschvorgang mit N,N-Dimethylformamid (DMF) angeschlossen werden, dem ein weiterer Waschvorgang mit Wasser folgt, um das DMF wieder zu entfernen. Auch nach mehrmaligem Wiederholen dieses Waschvorgangs bleibt jedoch eine gelblich-graue Restfärbung des auf diese Weise erhaltenen Produkts zurück. Verunreinigungen durch Fremdkristallite werden auf diese Weise ebenfalls nicht vollständig entfernt.

DE 10 2017 209840 A1 und DE 10 2015 211920 A1 beschreiben ein Verfahren zur Herstellung von MIL-100 (Al) aus einer Mischung aus Aluminiumnitrat und Trimesinsäure-Trimethylester im Wasser unter Einwirkung Salpetersäure.

Es besteht daher Bedarf an einem Syntheseverfahren zur Herstellung von MIL-100 (Al), bei dem das Produkt in hoher Reinheit und mit guter Ausbeute gewonnen wird und möglichst keine Verfärbungen durch Verunreinigungen aufweist. Zudem ist es wünschenswert, dass bei der Synthese möglichst nachhaltige Reaktionsbedingungen herrschen, bei denen keine gefährlichen Substanzen freigesetzt werden, und sich die Synthese auch auf größere Maßstäbe übertragen lässt.

Es hat sich überraschenderweise gezeigt, dass ein Herstellverfahren für MIL-100 (Al), bei dem Aluminiumnitrat und Trimesinsäure in einem Alkohol/Wasser-Gemisch als Reaktionsmedium zur Reaktion gebracht werden und dabei NH₃ und/oder eine NH₃ freisetzende Verbindung als Base zur Deprotonierung der Trimesinsäure fungiert, bei Reaktionstemperaturen unter 200°C durchgeführt werden kann. Das so unter milden Reaktionsbedingungen und ohne die Bildung gefährlicher Gase erhaltene MIL-100 (Al) weist keine Verfärbungen durch Nebenprodukte oder Fremdphasen auf; auch sind die Verfahrensschritte skalierbar.

Gegenstand der vorliegenden Anmeldung ist daher ein Verfahren zur Herstellung von MIL-100(Al), bei dem Aluminiumnitrat und Trimesinsäure in einem Alkohol/WasserGemisch unter Einwirkung einer Base, ausgewählt aus NH₃, einer NH₃ freisetzenden Verbindungen oder Mischungen daraus zur Reaktion gebracht werden. Als Basen können Ammoniak selbst sowie Ammoniak freisetzende Verbindungen eingesetzt werden. Unter diesen ist die Gruppe bestehend aus Harnstoff, Urotropin, Ammoniumcarbamat sowie Mischungen derselben besonders bevorzugt, insbesondere Harnstoff.

Als Lösemittel dient in dieser Synthese ein Alkohol/Wasser-Gemisch. Als Lösemittel geeignete Alkohole sind beispielsweise die - gegebenenfalls einseitig mit einem C₁₋₆-Alkanol veretherten - C₂₋₆-Alkylenglykole und Poly-C₂₋₃-alkylenglykolether mit durchschnittlich 1 bis 9 gleichen oder verschiedenen, vorzugsweise gleichen, Alkylenglykolgruppen pro Molekül wie auch die C₁₋₆-Alkohole. Dabei sind ein- oder mehrwertige C₁₋₆-Alkohole besonders bevorzugt, vorzugsweise ausgewählt aus der Gruppe umfassend Methanol, Ethanol, Propanol, Isopropanol, Ethylenglykol, 1,2-Propandiol (Propylenglykol) 1,3-Propandiol, Glycerin, sowie Gemischen derselben Es ist ganz besonders bevorzugt, wenn es sich bei dem Alkohol um einen mehrwertigen Alkohol oder um ein Gemisch mehrwertiger Alkohole handelt.

Insbesondere bevorzugt wird ein mehrwertiger Alkohol ausgewählt aus der Gruppe bestehend aus Glycerin, 1,2-Propandiol, 1,3-Propandiol sowie Gemischen derselben eingesetzt, wobei Glycerin und 1,2-Propandiol sowie Gemische derselben ganz besonders bevorzugt sind.

Bevorzugt werden dabei der Alkohol und das Wasser in einem Verhältnis von 98:2 bis 20:80, bevorzugt 80:20 bis 40:60 Vol.-% bei Raumtemperatur eingesetzt.

Es ist bevorzugt, dass die Reaktion unter milden Bedingungen durchgeführt wird. Daher ist es bevorzugt, wenn eine Reaktionstemperatur unterhalb von 200°C, vorzugsweise unterhalb von 160°C eingestellt wird.

Das mit dem erfindungsgemäßen Verfahren hergestellte MOF kann in Wasch- oder Reinigungsmitteln vorzugsweise in Mengen von 0,001 bis 10 Gew.-%, bevorzugt von 0,01 bis 7 Gew.-%, insbesondere von 0,01 bis 5 Gew.-%, bevorzugt von 0,25 bis 2,5 Gew.-% und weiter bevorzugt von 0,5 bis 1 Gew.-% eingesetzt werden. Es hat sich gezeigt, dass ein Mehr an MOF nicht zu einer Verringerung von Fehlgerüchen beiträgt. Ein Anteil von 0,001 Gew.-% ist jedoch notwendig, um einen Effekt zu erlangen. Besonders gute Effekte werden erreicht, wenn MOF in einem Anteil von 0,01 Gew.-% oder mehr und insbesondere von wenigstens 0,25 Gew.-% enthalten sind. Größere Anteile MOF können zwar eine bessere Wirkung erzielen, führen jedoch entsprechend auch zu höheren Kosten. Mit einem Anteil von 10 Gew.-% kann eine gute Geruchsreduzierung oder -verhinderung erzielt werden. Ein Anteil von 1 Gew.-% führt ebenso zu einer deutlichen Verminderung der unerwünschten Gerüche.

Die erfindungsgemäß hergestellten MOF sind vorzugsweise als Partikel in Wasch- oder Reinigungsmittel eingearbeitet. Dabei beträgt die Partikelgröße vorzugsweise 0,5 bis 100 µm, insbesondere 5 bis 70 µm, besonders bevorzugt 10 bis 50 µm. Liegen die MOF als Nanopartikel vor, so besteht vor allem bei Waschmitteln die Gefahr, dass nur ein kleiner Anteil auf dem Substrat deponiert und damit genutzt wird, während der Großteil ungenutzt weggespült wird. Ist die Teilchengröße größer als 100 µm, so sind sie für das menschliche Auge sichtbar. Die MOF lagern sich auf der mit dem Wasch- oder Reinigungsmittel behandelten Oberfläche ab. Sie wären dementsprechend auf der behandelten Textiloberfläche als Verunreinigung zu erkennen, wenn sie eine Größe von 100 µm oder mehr aufweisen. Daher ist die Teilchengröße vorzugsweise kleiner als 75 µm und insbesondere kleiner als 50 µm.

Wasch- und Reinigungsmittel können die erfindungsgemäß hergestellten MOF vorzugsweise in einer Menge von 0,001 bis 10 Gew.-%, bevorzugt von 0,01 bis 7 Gew.-%, insbesondere von 0,01 bis 5 Gew.-%, bevorzugt von 0,25 bis 2,5 Gew.-% und weiter bevorzugt von 0,5 bis 1 Gew.-% enthalten.

Es hat sich gezeigt, dass eine spezifische Oberfläche, welche im Bereich von 100 bis 4000 m²/g liegt, besonders geeignet ist, Fehlgerüche zu speichern, ohne jedoch die Wirksamkeit hinsichtlich der Reinigung der erfindungsgemäßen Wasch- oder Reinigungsmittel zu beeinflussen. Die spezifische Oberfläche wird mit der Einpunkt-BET-Methode gemäß DIN ISO 9277:2014 bestimmt. Bevorzugt beträgt die spezifische Oberfläche 500 bis 3200 m²/g und insbesondere 800 bis 3000 m2/g.

Zu den Wasch- und Reinigungsmitteln, in denen die MOF eingesetzt werden können, zählen insbesondere Haushaltsreiniger, Wasch-, Reinigungs- oder Vorbehandlungsmittel oder Erfrischungssprays für Textilien, Wäscheweichspülmittel, Kosmetikprodukte oder auch Air Care-Produkte, beispielsweise Raumsprays oder Lufterfrischern. Haushaltsreiniger im Sinne dieser Anmeldung sind beispielsweise Reinigungsmittel zur Reinigung von harten Oberflächen, Fensterreiniger, Badreiniger, WC-Reiniger oder Geschirrspülmittel (Handgeschirrspülmittel und Geschirrspülmittel für maschinelle Anwendung). Kosmetikprodukte im Sinne der vorliegenden Anmeldung sind Produkte zur kosmetischen Behandlung von Haut und Haaren (Hautbehandlungsmittel, Haarbehandlungsmittel) wie beispielsweise Haarshampoos, Haarspülungen, -kuren, -conditioner, Mittel zum Bleichen, Färben oder Verformen der Haare, wie Färbemittel, Bleichmittel, Tönungsmittel, Farbfixierungsmittel, Wellmittel oder Stylingpräparate wie Haarfestiger, Schaumfestiger oder Styling-Gels, Duschgele, Körpercremes, -lotionen, Gesichtscremes oder Deodorants.

In Erfrischungssprays für Textilien wird das MOF bevorzugt in Form einer Dispersion eingearbeitet; weiterhin sind vorzugsweise wenigstens ein Dispergierhilfsmittel sowie wenigstens ein Lösungsmittel, insbesondere Wasser, enthalten. Das MOF kann dann als Aerosol unmittelbar auf besonders geruchskritische Bereiche von Textilien, beispielsweise den Achselbereich von Oberbekleidung, oder von textilen Partien von Möbeln, beispielsweise Sitzflächen von Sofas oder Sesseln, aufgebracht werden. Dies ermöglicht durch den Anwender eine gezielte Dosierung der MOF an die gewünschten Stellen.

Wird dieses MOF in festen, insbesondere pulverförmigen Waschmitteln eingesetzt, ist es bevorzugt, wenn diese weiterhin die folgenden Komponenten enthalten:
- Aniontenside (anionische Tenside), wie vorzugsweise Alkylbenzolsulfonat oder Alkylsulfat, insbesondere in einem Anteil von 5 bis 30 Gew.-%, dabei kann ein Aniontensid oder es können Mischungen unterschiedlicher Aniontenside enthalten sein,
- nichtionische Tenside, wie vorzugsweise Fettalkoholpolyglycolether, Alkylpolyglucosid oder Fettsäureglucamid, beispielsweise 0,5 bis 15 Gew.-% von einem oder mehreren nichtionischen Tensiden,
- einen oder mehrere Gerüststoffe, wie beispielsweise Zeolith, Polycarboxylat oder Natriumcitrat, in Mengen von insbesondere 0 bis 70 Gew.-%, vorteilhafterweise von 5 bis 60 Gew.-%, vorzugsweise von 10 bis 55 Gew.-%, insbesondere von 15 bis 40 Gew.-%,
- eine oder mehrere alkalische Verbindungen, wie zum Beispiel Natriumcarbonat, insbesondere in Mengen von 0 bis 35 Gew.-%, vorteilhafterweise von 1 bis 30 Gew.-%, vorzugsweise von 2 bis 25 Gew.-%, insbesondere von 5 bis 20 Gew.-%,
- ein oder mehrere Bleichmittel, wie zum Beispiel Natriumperborat oder Natriumpercarbonat, in Mengen insbesondere von 0 bis 30 Gew.-% vorteilhafterweise von 5 bis 25 Gew.-%, vorzugsweise von 10 bis 20 Gew.-%,
- gegebenenfalls einen oder mehrere Korrosionsinhibitoren, zum Beispiel Natriumsilicat, beispielsweise in Mengen von 0 bis 10 Gew.-%, vorteilhafterweise von 1 bis 6 Gew.-%, vorzugsweise von 2 bis 5 Gew.-%, insbesondere von 3 bis 4 Gew.-%,
- einen oder mehrere Stabilisatoren, zum Beispiel Phosphonate, vorteilhafterweise in einem Anteil von 0 bis 1 Gew.-%,
- einen oder mehrere Schauminhibitoren, zum Beispiel Seife, Siliconöle, Paraffine vorteilhafterweise in einem Anteil von 0 bis 4 Gew.-%, vorzugsweise von 0,1 bis 3 Gew.-%, insbesondere von 0,2 bis 1 Gew.-%,
- Enzyme, zum Beispiel Proteasen, Amylasen, Cellulasen, Lipasen, vorteilhafterweise in einem Anteil von 0 bis 2 Gew.-%, vorzugsweise von 0,2 bis 1 Gew.-%, insbesondere von 0,3 bis 0,8 Gew.-%,
- Vergrauungsinhibitor, zum Beispiel Carboxymethylcellulose, vorteilhafterweise in einem Anteil von 0 bis 1 Gew.-%,
- Verfärbungsinhibitor, zum Beispiel Polyvinylpyrrolidon-Derivate, vorteilhafterweise in einem Anteil von 0 bis 2 Gew.-%,
- Stellmittel, zum Beispiel Natriumsulfat, vorteilhafterweise in einem Anteil von 0 bis 20 Gew.-%,
- optische Aufheller, wie beispielsweise Stilben-Derivat, Biphenyl-Derivat, vorteilhafterweise in einem Anteil von 0 bis 0,4 Gew.-%, insbesondere von 0,1 bis 0,3 Gew.-%,
- gegebenenfalls Duftstoffe, wie beispielsweise Parfümöle,
- gegebenenfalls Wasser,
- gegebenenfalls Seife,
- gegebenenfalls Bleichaktivatoren,
- gegebenenfalls Cellulosederivate,
- gegebenenfalls Schmutzabweiser.

Die Angaben erfolgen in Gew.-% und beziehen sich jeweils auf das Gesamtgewicht des Waschmittels.

Auch in flüssigen oder gelförmigen Wasch- oder Reinigungsmitteln lassen sich die mit dem erfindungsgemäßen Verfahren hergestellten MOFs einsetzen. Bevorzugte flüssige Wasch- oder Reinigungsmittel weisen einen Wassergehalt insbesondere von 3 bis 95 Gew.-%, vorzugsweise von 8 bis 80 Gew.-% und insbesondere von 25 bis 70 Gew.-% auf, bezogen auf das Gesamtgewicht des Wasch- oder Reinigungsmittels. Im Falle von flüssigen Konzentraten kann der Wassergehalt auch geringer sein und 30 Gew.-% oder weniger, vorzugsweise 20 Gew.-% oder weniger, insbesondere 15 Gew.-% oder weniger betragen. Die Angaben in Gew.-% sind auch hier jeweils bezogen auf das Gesamtgewicht des Mittels. Neben Wasser können die flüssigen Mittel auch weitere nichtwässrige Lösungsmittel aufweisen. Ein bevorzugtes flüssiges, insbesondere gelförmiges Waschmittel kann neben den erfindungsgemäß hergestellten MOFs vorzugsweise Komponenten umfassen, die ausgewählt sind aus den folgenden:
- Aniontenside (anionische Tenside), wie vorzugsweise Alkylbenzolsulfonat, Alkylsulfat, insbesondere in einem Anteil von 5 bis 40 Gew.-%, dabei kann ein Aniontensid oder es können Mischungen unterschiedlicher Aniontenside enthalten sein,
- nichtionische Tenside, wie vorzugsweise Fettalkoholpolyglycolether, Alkylpolyglucosid, Fettsäureglucamid, vorzugsweise in Mengen von 0,5 bis 25 Gew.-% von einem oder mehreren nichtionischen Tensiden,
- ein oder mehrere Gerüststoffe, wie zum Beispiel Zeolith, Polycarboxylat, Natriumcitrat, vorteilhafterweise in einem Anteil von 0 bis 15 Gew.-%, vorzugsweise von 0,01 bis 10 Gew.-%, insbesondere von 0,1 bis 5 Gew.-%,
- einen oder mehrere Schauminhibitoren, zum Beispiel Seife, Siliconöle, Paraffine, bevorzugt in Mengen von 0 bis 10 Gew.-%, vorteilhafterweise von 0,1 bis 4 Gew.-%, vorzugsweise von 0,2 bis 2 Gew.-%, insbesondere 1 bis 3 Gew.-%,
- Enzyme wie beispielsweise Proteasen, Amylasen, Cellulasen, Lipasen, bevorzugt in Mengen von 0 bis 3 Gew.-%, vorteilhafterweise von 0,1 bis 2 Gew.-%, vorzugsweise von 0,2 bis 1 Gew.-%, insbesondere von 0,3 bis 0,8 Gew.-%,
- optische Aufheller, beispielsweise Stilben-Derivat, Biphenyl-Derivat, insbesondere in Mengen von 0 bis 1 Gew.-%, vorteilhafterweise von 0,1 bis 0,3 Gew.-%, insbesondere von 0,1 bis 0,4 Gew.-%,
- gegebenenfalls Duftstoffe, wie beispielweise Parfümöle,
- gegebenenfalls Stabilisatoren,
- Wasser,
- gegebenenfalls Seife, insbesondere von 0 bis 25 Gew.-%, vorteilhafterweise von 1 bis 20 Gew.-%, vorzugsweise von 2 bis 15 Gew.-%, besonders von 5 bis 10 Gew.-%,
- gegebenenfalls nichtwässrige Lösungsmittel, insbesondere Alkohole, vorteilhafterweise von 0 bis 25 Gew.-%, vorzugsweise von 1 bis 20 Gew.-%, insbesondere von 2 bis 15 Gew.-%.

Die Angaben in Gew.-% beziehen sich jeweils auf das Gesamtgewicht des Wasch- oder Reinigungsmittels.

Die MOFs können weiterhin auch in flüssige Weichspüler eingearbeitet werden, die zusätzlich vorzugsweise weitere Komponenten enthalten können, die ausgewählt sind aus den folgenden:
- kationische Tenside, wie insbesondere Esterquats, bevorzugt in Mengen von 5 bis 30 Gew.-%,
- Cotenside, wie beispielsweise Glycerolmonostearat, Stearinsäure, Fettalkohole, Fettalkoholethoxylate, insbesondere in Mengen von 0 bis 5 Gew.-%, vorzugsweise von 0,1 bis 4 Gew.-%,
- Emulgatoren, wie zum Beispiel Fettaminethoxylate, insbesondere in Mengen von 0 bis 4 Gew.-%, vorzugsweise von 0,1 bis 3 Gew.-%,
- gegebenenfalls Duftstoffe, wie beispielweise Parfümöle,
- gegebenenfalls Farbstoffe, vorzugsweise im ppm-Bereich,
- gegebenenfalls Stabilisatoren, vorzugsweise im ppm-Bereich,
- Lösungsmittel, wie insbesondere Wasser, in Mengen von vorzugsweise 60 bis 90 Gew.-%.

Die Angaben in Gew.-% beziehen sich jeweils auf das Gesamtgewicht der Formulierung, also des Weichspülers. Die Angabe in ppm bezieht sich auf das Gewicht (Gew.-ppm).

In den nachfolgenden Ausführungsbeispielen wird die vorliegende Erfindung beispielhaft erläutert, ohne jedoch einschränkend zu sein. Beschriebene Ausführungsformen können ohne jegliche Einschränkung erfindungsgemäß beliebig miteinander kombiniert werden.

### Ausführungsbeispiele

### Beispiel 1: Synthese von MIL-100(Al) in 68 Vol.-% 1,2-Propandiol/Wasser-Gemisch bei 100°C/48h im 10l-Maßstab

164,8 g (439,3 mmol) Al(NO₃)₃·9 H₂O wurden zusammen mit 22,0 g (366,3 mmol) Harnstoff in 1 I dest. Wasser gelöst. In einen Rührkessel wurden 5,8 I Propandiol zusammen mit 3,2 I Wasser gegeben und unter Rühren (280 rpm) auf 60°C vorgeheizt. Nach Zugabe der wässrigen Aluminiumnitrat/Harnstofflösung wurden 73,8 g (351,2 mmol) feste Trimesinsäure unter Rühren zugegeben. Der Rührkessel wurde verschlossen, auf 100°C geheizt, das Rühren beim Erreichen dieser Temperatur abgestellt und das Reaktionsgemisch 48 Stunden bei 100°C gehalten. Anschließend wurde der Rührkessel abgelassen und der Inhalt zentrifugiert, um den Feststoff von der Mutterlauge abzutrennen. Das Rohprodukt wurde in Ethanol suspendiert, 30 Minuten gerührt, erneut abzentrifugiert und anschließend in einer Soxhlet-Apparatur mit Ethanol extrahiert. Dann wurde der Feststoff zunächst für 8 Stunden bei 80°C im Umlufttrockenschrank getrocknet und danach bei 150°C über Nacht im Vakuum (10⁻³ mbar) aktiviert.

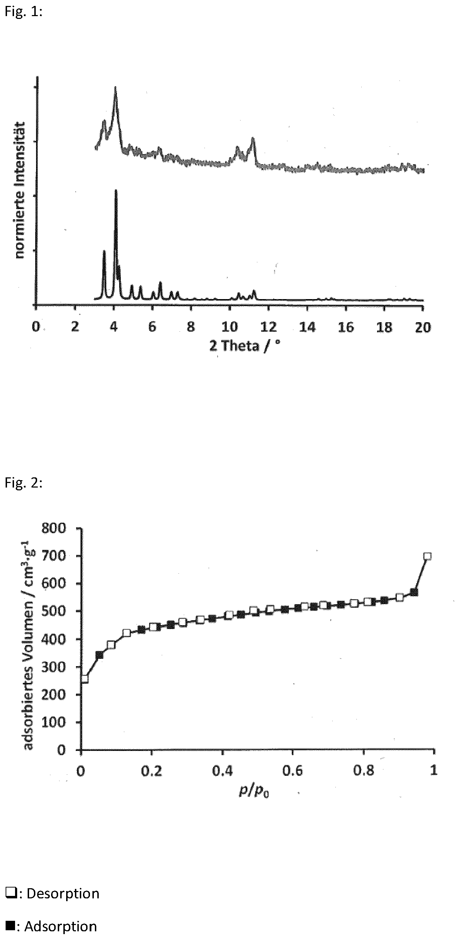

Das Röntgenpulverdiffraktogramm der Probe (Fig. 1) zeigt die Reflexe von MIL-100(Al) an den erwarteten Positionen; außer MIL-100(Al) ist keine andere kristalline Phase zu erkennen (oberer Graph: Synthese, unterer Graph: Theorie).

Aus der bei 77K aufgenommenen Stickstoff-Adsorptionsisotherme (Fig. 2) wurde bei p/p₀ = 0,3 mittels der Einpunkt-BET-Methode eine spezifische Oberfläche von 1420 m²/g bestimmt. Das bei p/p₀ = 0,9 bestimmte Porenvolumen liegt bei 0,87 cm³/g.

### Beispiel 2: Synthese von MIL-100(Al) in 58 Vol.-% Glycerin/Wasser-Gemisch bei 100°C/48h im 10l-Maßstab

164,8 g (439,3 mmol) Al(NO₃)₃·9 H₂O wurden zusammen mit 22,0 g (366,3 mmol) Harnstoff in 1 I dest. Wasser gelöst. In einen Rührkessel wurden 6,8 I Glycerin (86 Vol.-% Lösung in Wasser) zusammen mit 2,2 I Wasser gegeben und unter Rühren (280 rpm) auf 60°C vorgeheizt. Anschließend wurden 73,8 g (351,2 mmol) feste Trimesinsäure unter Rühren zugegeben und nach fünfminütigem Rühren auch die wässrige Aluminiumnitrat/Harnstofflösung zugegeben. Der Rührkessel wurde verschlossen, auf 100°C geheizt, das Rühren beim Erreichen dieser Temperatur abgestellt und das Reaktionsgemisch 48 Stunden bei 100°C gehalten. Anschließend wurde der Rührkessel abgelassen und der Inhalt zentrifugiert, um den Feststoff von der Mutterlauge abzutrennen. Das Rohprodukt wurde in Ethanol suspendiert, 30 Minuten gerührt, erneut abzentrifugiert und anschließend in einer Soxhlet-Apparatur mit Ethanol extrahiert. Dann wurde der Feststoff zunächst für 8 Stunden bei 80°C im Umlufttrockenschrank getrocknet und danach bei 150°C über Nacht im Vakuum (10⁻³ mbar) aktiviert.

Die spezifische Oberfläche des Produktes lag bei 1320 m2/g, das Porenvolumen bei 0,79 cm³/g.

### Beispiel 3: Synthese von MIL-100(Al) in 68 Vol.-% 1,2-Propandiol/Wasser-Gemisch bei 100°C/48h im 20l-Maßstab bei höherer Einsatzkonzentration der Rohstoffe

494,4 g (1317,9 mmol) Al(NO₃)₃·9 H₂O wurden zusammen mit 66,0 g (1098,9 mmol) Harnstoff in 2 I dest. Wasser gelöst. In einen Rührkessel wurden 11,6 I Propandiol zusammen mit 6,4 I Wasser gegeben und unter Rühren (280 rpm) auf 65°C vorgeheizt. Nach Zugabe der wässrigen Aluminiumnitrat/Harnstofflösung wurden 221,4 g (1053,6 mmol) feste Trimesinsäure unter Rühren zugegeben. Der Rührkessel wurde verschlossen, auf 100°C geheizt, das Rühren beim Erreichen dieser Temperatur abgestellt und das Reaktionsgemisch 48 Stunden bei 100°C gehalten. Anschließend wurde der Rührkessel abgelassen und der Inhalt zentrifugiert, um den Feststoff von der Mutterlauge abzutrennen. Das Rohprodukt wurde in Ethanol suspendiert, 30 Minuten gerührt, erneut abzentrifugiert und anschließend in einer Soxhlet-Apparatur mit Ethanol extrahiert. Dann wurde der Feststoff zunächst für 8 Stunden bei 80°C im Umlufttrockenschrank getrocknet und danach bei 150°C über Nacht im Vakuum (10⁻³ mbar) aktiviert.

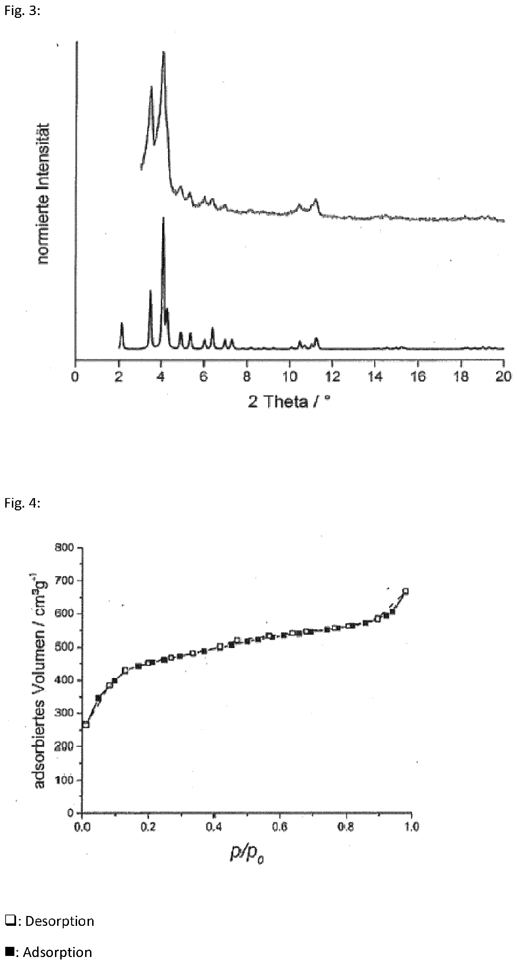

Das Röntgenpulverdiffraktogramm der Probe (Fig. 3) zeigt die Reflexe von MIL-100(Al) an den erwarteten Positionen; außer MIL-100(Al) ist keine andere kristalline Phase zu erkennen (oberer Graph: Synthese, unterer Graph: Theorie).

Aus der bei 77K aufgenommenen Stickstoff-Adsorptionsisotherme (Fig. 4) wurde bei p/p₀ = 0,3 mittels der Einpunkt-BET-Methode eine spezifische Oberfläche von 1448 m²/g bestimmt. Das bei p/p₀ = 0,9 bestimmte Porenvolumen liegt bei 0,92 cm³/g.

## Patentansprüche

1. Verfahren zur Herstellung von MIL-100 (Al), **dadurch gekennzeichnet, dass** Aluminiumnitrat und Trimesinsäure in einem Alkohol/Wasser-Gemisch unter Einwirkung einer Base, ausgewählt aus NH₃, einer NH₃ freisetzenden Verbindung oder Mischungen daraus zur Reaktion gebracht werden.

2. Verfahren gemäß Anspruch 1, **dadurch gekennzeichnet, dass** die Base ausgewählt wird aus der Gruppe bestehend aus Harnstoff, Urotropin, Ammoniumcarbamat sowie Mischungen derselben.

3. Verfahren gemäß einem der Ansprüche 1 oder 2, **dadurch gekennzeichnet, dass** als Base Harnstoff eingesetzt wird.

4. Verfahren gemäß einem der vorstehenden Ansprüche, **dadurch gekennzeichnet, dass** der eingesetzte Alkohol ausgewählt ist aus der Gruppe bestehend aus mehrwertigen Alkoholen sowie Gemischen mehrwertiger Alkohole und vorzugsweise ausgewählt ist aus der Gruppe bestehend aus Glycerin, 1,2-Propandiol, 1,3-Propandiol sowie Gemischen derselben.

5. Verfahren gemäß einem der vorstehenden Ansprüche, **dadurch gekennzeichnet, dass** der Alkohol und das Wasser in einem Verhältnis von 98:2 bis 20:80, vorzugsweise 80:20 bis 40:60 Vol.-% bei Raumtemperatur eingesetzt werden.

6. Verfahren gemäß einem der vorstehenden Ansprüche, **dadurch gekennzeichnet, dass** die Reaktion bei einer Temperatur unterhalb von 200°C, vorzugsweise unterhalb von 160°C durchgeführt wird.

## Claims

1. Process for the preparation of MIL-100 (Al), **characterized in that** aluminum nitrate and trimesic acid are reacted in an alcohol/water mixture under the action of a base selected from NH₃, a NH₃ releasing compound or mixtures thereof.

2. Process according to claim 1, **characterized in that** the base is selected from the group consisting of urea, urotropin, ammonium carbamate and mixtures thereof.

3. Process according to one of claims 1 or 2, **characterized in that** urea is used as base.

4. Process according to one of the preceding claims, **characterized in that** the alcohol used is selected from the group consisting of polyhydric alcohols and mixtures of polyhydric alcohols and is preferably selected from the group consisting of glycerol, 1,2-propanediol, 1,3-propanediol and mixtures thereof.

5. Process according to any of the preceding claims, **characterized in that** the alcohol and the water are used in a ratio of 98:2 to 20:80, preferably 80:20 to 40:60 % by volume at room temperature.

6. Process according to any one of the preceding claims, **characterized in that** the reaction is carried out at a temperature below 200°C, preferably below 160°C.

## Revendications

1. Procédé de préparation de MIL-100 (AI), **caractérisé en ce que** le nitrate d'aluminium et l'acide trimésique sont mis à réagir dans un mélange alcool/eau sous l'action d'une base choisie parmi NH₃, un composé libérant NH₃ ou des mélanges de ceux-ci.

2. Procédé selon la revendication 1, **caractérisé en ce que** la base est choisie dans le groupe constitué par l'urée, l'urotropine, le carbamate d'ammonium et leurs mélanges.

3. Procédé selon l'une des revendications 1 ou 2, **caractérisé en ce que** l'on utilise de l'urée comme base.

4. Procédé selon l'une des revendications précédentes, **caractérisé en ce que** l'alcool utilisé est choisi dans le groupe constitué par les polyalcools ainsi que les mélanges de polyalcools et est de préférence choisi dans le groupe constitué par le glycérol, le 1,2-propanediol, le 1,3-propanediol ainsi que leurs mélanges.

5. Procédé selon l'une quelconque des revendications précédentes, **caractérisé en ce que** l'alcool et l'eau sont utilisés dans un rapport de 98:2 à 20:80, de préférence de 80:20 à 40:60 % en volume à température ambiante.

6. Procédé selon l'une quelconque des revendications précédentes, **caractérisé en ce que** la réaction est effectuée à une température inférieure à 200°C, de préférence inférieure à 160°C.
